## Europäisches Patentamt

## European Patent Office

## Office européen des brevets

(19)

(11) Veröffentlichungsnummer: **0 017 835**
**B1**

(12)

# EUROPÄISCHE PATENTSCHRIFT

(45) Veröffentlichungstag der Patentschrift:
30.11.83

(21) Anmeldenummer 80101708.8

(22) Anmeldetag: 31.03.80

(51) Int. Cl.³: **H 04 Q 11/04, H 04 J 3/00, H 04 M 3/56**

(54) Schaltungsanordnung zur Steuerung der Übertragung von Digital-Signalen, insbesondere PCM-Signalen, zwischen Anschlussstellen eines Zeitmultiplex-Fernmeldenetzes, insbesondere PCM-Zeitmultiplex-Fernmeldenetzes.

(30) Priorität: 17.04.79 DE 2915488

(43) Veröffentlichungstag der Anmeldung:
29.10.80 Patentblatt 80/22

(45) Bekanntmachung des Hinweises auf die Patenterteilung:
30.11.83 Patentblatt 83/48

(84) Benannte Vertragsstaaten:
**AT BE CH DE FR GB IT NL SE**

(56) Entgegenhaltungen:
**EP - A - 0 009 461
CH - A - 600 708
DE - A - 2 064 530
DE - A - 2 538 637
DE - A - 2 557 896
DE - B - 2 208 159
US - A - 3 870 825
US - A - 4 078 228**

**1974 International Zürich Seminar on Digital Communications, 12-15 März, 1974
IEEE New York (US) Seiten D3(1) bis D3(6)
Eurocon '77, 3-7 Mai 1977 Venedig (IT), Seiten 2.5.2.1. bis 2.5.2.5.
Applied Physics, Band 17, No. 2. Oktober 1978, Seiten 115-122**

(73) Patentinhaber: **Nixdorf Computer Aktiengesellschaft, Fürstenallee 7, D-4790 Paderborn (DE)**

(72) Erfinder: **Lubcke, Hartmut, Dipl. Ing., Hudeweg 30, D-4790 Paderborn (DE)**
Erfinder: **Backhaus, Martin, Dipl. Ing., Rolandsweg 70, D-4790 Paderborn (DE)**

(74) Vertreter: **Schaumburg, Schulz-Dörlam & Thoenes, Mauerkircherstrasse 31, D-8000 München 80 (DE)**

## Schaltungsanordnung zur Steuerung der Übertragung von Digital-Signalen, insbesondere PCM-Signalen, zwischen Anschlußstellen eines Zeitmultiplex-Fernmeldenetzes, insbesondere PCM-Zeitmultiplex-Fernmeldenetzes

Die Erfindung bezieht sich auf eine Schaltungsanordnung zur Steuerung der Übertragung von Digital-Signalen, insbesondere PCM-Signalen, zwischen Anschlußstellen eines Zeitmultiplex-Fernmeldenetzes, mittels einer zentralen Steuereinrichtung über eine Multiplexleitung, mit der jede Anschlußstelle verbindbar ist und auf der jeder in eine Verbindung einbezogenen Anschlußstelle ein Sendepuls mit zyklisch wiederholt in aufeinanderfolgenden Pulsrahmen auftretenden Zeitschlitzen und ein Empfangspuls mit zyklisch wiederholt in aufeinanderfolgenden Pulsrahmen auftretenden Zeitschlitzen zugeteilt ist, wobei jeweils zu einer Anschlußgruppe zusammengefaßte Anschlußstellen mit ihren Sendeausgängen gemeinsam an einer Sendegruppenschiene und mit ihren Empfangseingängen gemeinsam an einer Empfangsgruppenschiene angeschlossen sind, sämtliche Gruppenschienen über Verstärker mit der Multiplexleitung verbunden sind, die Multiplexleitung durch eine einen Sendeleitungsteil und einen mit dem Sendeleitungsteil verbundenen Empfangsleitungsteil enthaltende Ringleitung mit einer zumindest der Anzahl der jeweils gleichzeitig zu übertragenden Signalbits eines Digital-Signals entsprechenden Anzahl von Einzelleitungen gebildet ist, die Sendegruppenschienen sämtlicher Anschlußgruppen jeweils mit einer zumindest der Anzahl der jeweils gleichzeitig zu übertragenden Signalbits eines Digital-Signals entsprechenden Anzahl von Einzelleitungen an den Einzelleitungen des Sendeleitungsteiles und die Empfangsgruppenschienen sämtlicher Anschlußgruppen jeweils mit einer zumindest der Anzahl der jeweils gleichzeitig zu übertragenden Signalbits eines Digital-Signals entsprechenden Anzahl von Einzelleitungen an den Einzelleitungen des Empfangsleitungsteiles der Ringleitung angeschlossen sind. Bei einer Schaltungsanordnung dieser Art, die auch in der EP-A-2-0 009 461 mit einer Priorität vom 26. 09. 78 und 08. 11. 78, veröffentlicht am 02. 04. 80, beschrieben ist, werden die Informations-Signale bitparallel übertragen, so daß in dem Rahmen verfügbarer Zeitschlitze mehr Informationen übertragbar und eine größere Zahl von Teilnehmern an ein Übermittlungssystem anschaltbar sind als bei solchen Systemen, in denen die Informations-Signale bitseriell übertragen werden.

Bei Systemen dieser Art ist eine Überwachungsfunktion erforderlich, um das ordnungsgemäße Arbeiten der einzelnen Anschlußgruppen festzustellen. Hierbei kann beispielsweise eine Überwachung dahingehend erfolgen, ob die für den Verbindungsaufbau vorgesehenen Zeitschlitze auch tatsächlich frei sind. Sind sie besetzt, so ist ein Fehlermeldesignal erforderlich, mit dem Fehlfunktionen verhindert werden können.

Es sind zwar weitere Vermittlungssysteme bekannt, die bitseriell oder bitparallel arbeiten können, jedoch keine Maßnahmen vorgesehen, um auf einfache, jedoch wirksame Weise eine Überwachungsfunktion durchzuführen. Solche Systeme zeigen beispielsweise die DE-A-2 064 530 und 2 538 637.

Es ist Aufgabe der Erfindung, für ein Zeitmultiplex-Fernmeldenetz eine einfache und wirksame Möglichkeit zur Überwachung der an die Multiplexleitungen anzuschaltenden Anschlußgruppen anzugeben.

Diese Aufgabe wird für eine Schaltungsanordnung eingangs genannter Art erfindungsgemäß dadurch gelöst, daß mit jeder Sendegruppenschiene eine Überwachungseinrichtung verbunden ist, mit der die Belegung von für Verbindungszwecke gesperrten Zeitschlitzen auf der jeweiligen Sendegruppenschiene überwachbar ist und die bei Ermittlung der Belegung eines solchen Zeitschlitzes ein Fehlermeldesignal abgibt.

Die Erfindung beruht auf der Erkenntnis, daß bei der bitparallelen Übertragung von Informationen eine einfache Abtrennung fehlerhaft arbeitender Anschlußgruppen möglich ist, da bei einem bitparallel arbeitenden Prinzip keine besonderen Speichervorrichtungen zwischen den Anschlußgruppen und der Multiplexleitung erforderlich sind, wie es beispielsweise bei bitseriell arbeitenden Systemen der Fall ist. Eine einfache Abschaltung einer Anschlußgruppe kann mit Schaltvorrichtungen durchgeführt werden, die ihrerseits durch die gemäß der Erfindung vorgesehene Überwachungseinrichtung mittels des Fehlermeldesignals betätigt werden. Diese Art der Überwachung stellt sich als besonders leicht durchführbar dar und erfordert, auch für ein gesamtes System gesehen, einen äußerst geringen Aufwand.

Zweckmäßigerweise sind die zu den einzelnen Anschlußgruppen gehörenden Anschlußstellen jeweils über eine gruppenindividuell vorgesehene Befehlssammelleitung mit der zentralen Steuereinrichtung verbunden. Dies bringt den Vorteil einer sicheren Befehlssteuerung der einzelnen Anschlußstellen mit sich. Bei Fehlerhaftigkeit von Anschlußstellen ist überdies die sogenannte Ausfallbreite relativ gering; sie beschränkt sich dann auf diejenigen Anschlußgruppen, in denen fehlerhaft arbeitende Anschlußstellen enthalten sind.

Die zuvor erwähnte Befehlssammelleitung ist zweckmäßigerweise für eine serielle Signalbitübertragung ausgelegt. Dies bringt in vorteilhafter Weise einen besonders geringen schaltungstechnischen Aufwand für die Befehlssignalübertragung mit sich.

Vorzugsweise ist jeder Anschlußgruppe überdies eine Abschalteinrichtung zugehörig, die von der zugehörigen Überwachungseinrichtung steuerbar ist. Dies ermöglicht in vorteilhafter Weise bei Feststellen eines Fehlers in der jeweiligen Anschlußgruppe, diese von der für sämtliche Anschlußgruppen gemeinsam vorgesehenen Ringleitung abzutrennen.

Mit der Ringleitung ist zweckmäßigerweise eine Diagnoseeinheit verbunden. Dies erlaubt in vorteilhafter Weise, die Funktionsfähigkeit der Ringleitung und auch der gesamten Schaltungsanforderung auf einfache Weise zu überprüfen.

An der betreffenden Ringleitung sind vorzugsweise die für eine Signalisierungsgabe erforderlichen Signalgeneratoren angeschlossen, denen jeweils ein Sendepuls fest zugeordnet ist. Dies bringt den Vorteil einer besonders einfachen Zuteilbarkeit der Signalisierungszeichen für die jeweilige Verbindung mit sich.

Eine besonders zweckmäßige Ausgestaltung der Erfindung ergibt sich dadurch, daß die einzelnen Anschlußstellen in Konferenzverbindungen einbeziehbar sind, wozu ihnen den Sendepulsen der jeweils übrigen, in die jeweilige Konferenzverbindung einbezogenen Anschlußstellen entsprechende Empfangspulse zugeteilt werden, wobei in der jeweiligen Anschlußstelle eine Addition von den jeweils übertragenen Digital-Signalen entsprechenden Analog-Signalen erfolgt. Hierdurch ergibt sich der Vorteil, daß auf besonders einfache Weise Konferenzverbindungen zwischen Anschlußstellen hergestellt werden können, was speziell in dem Fall von Nutzen ist, daß es sich bei den betreffenden Anschlußstellen um Teilnehmerstellen handelt.

Zweckmäßigerweise ist das Tastverhältnis T von aus Digital-Signalen gewonnenen Analog-Signalen in der jeweiligen Anschlußstelle so gewählt, daß es der Beziehung

$$T \geq td/To$$

genügt, wobei td die Decodierzeit eines Digital-Signals und damit der minimale zeitliche Abstand zwischen zwei zu berücksichtigenden Empfangs-Zeitschlitzen und To die Dauer eines Pulsrahmens bedeuten. Hierdurch ergibt sich der Vorteil, daß mit besonders geringem schaltungstechnischem Aufwand die Herstellung von Konferenzverbindungen zwischen Anschlußstellen der Schaltungsanordnung bzw. Vermittlungsanlage ermöglicht ist.

Von Vorteil ist es dabei, wenn am Eingang eines einem Digital-Analog-Wandler nachgeschalteten Filters ein Tastschalter angeschlossen ist, der durch den Empfangszeitschlitzen entsprechende Schaltimpulse betätigbar ist. Dies bringt den Vorteil eines besonders geringen schaltungstechnischen Aufwands mit sich.

Die Steuerung der Abgabe und Aufnahme von Digital-Signalen in jeder Anschlußstelle erfolgt vorzugsweise durch eine der jeweiligen Anschlußstelle zugehörige Haltesatzschaltung, in der die Zählerstellungen eines zyklisch betriebenen Zählers — der während der Dauer jedes der auf der Ringleitung maßgebenden Pulsrahmens in eine der Anzahl der auf dieser Ringleitung für eine Signalübertragung benutzbaren Pulse entsprechende Anzahl von Zählerstellungen einstellbar ist — mit einer die dem jeweils zu benutzenden Sendepuls entsprechenden, von der zentralen Steuereinrichtung bereitgestellten Sendepulsadresse und mit einer die dem jeweils zu benutzenden Empfangspuls entsprechenden, von der zentralen Steuereinrichtung bereitgestellten Empfangspulsadresse verglichen wird. Bei Feststellen einer Übereinstimmung zwischen einer Zählerstellung des Zählers und der Sendepulsadresse sowie einer anderen Zählerstellung des Zählers und der Empfangspulsadresse wird von der betreffenden Haltesatzschaltung ein entsprechendes Steuersignal zur Abgabe eines Digital-Signals an die zugehörige Sendegruppenschiene bzw. ein entsprechendes Steuersignal zur Aufnahme eines Digital-Signals von der zugehörigen Empfangsgruppenschiene abgegeben. Hierdurch ergibt sich der Vorteil eines besonders einfachen schaltungstechnischen Aufwands in der zentralen Steuereinrichtung und auch in den einzelnen Anschlußstellen bezüglich der Zuteilung der einzelnen Sendepulse und Empfangspulse. In diesem Zusammenhang sei darauf hingewiesen, daß der einer Anschlußstelle als Sendepuls zugeteilte Puls einer mit dieser Anschlußstelle in Verbindung stehenden weiteren Anschlußstelle als Empfangspuls zugeteilt wird. Der dieser zuletzt genannten Anschlußstelle als Sendepuls zugeteilte Puls ist der erstgenannten Anschlußstelle als Empfangspuls zugeteilt.

Anhand von Zeichnungen wird die Erfindung nachstehend an Ausführungsbeispielen näher erläutert.

Fig. 1 zeigt in einem Blockschaltbild eine erste Ausführungsform einer Schaltungsanordnung gemäß der Erfindung.

Fig. 2 zeigt in einem Blockschaltbild eine zweite Ausführungsform einer Schaltungsanordnung gemäß der Erfindung.

Fig. 3 zeigt in einem Blockschaltbild einen möglichen Aufbau einer der bei den Schaltungsanordnungen gemäß Fig. 1 und 2 vorgesehenen Einrichtungen.

Fig. 4 zeigt in einem Blockschaltbild eine Teilnehmerstellenschaltung der Schaltungsanordnung gemäß Fig. 1 oder 2.

Fig. 5 zeigt in einem Blockschaltbild eine Sende- und Empfangspulsadressierungsschaltung als Teil der Teilnehmerstellenschaltung gemäß Fig. 4.

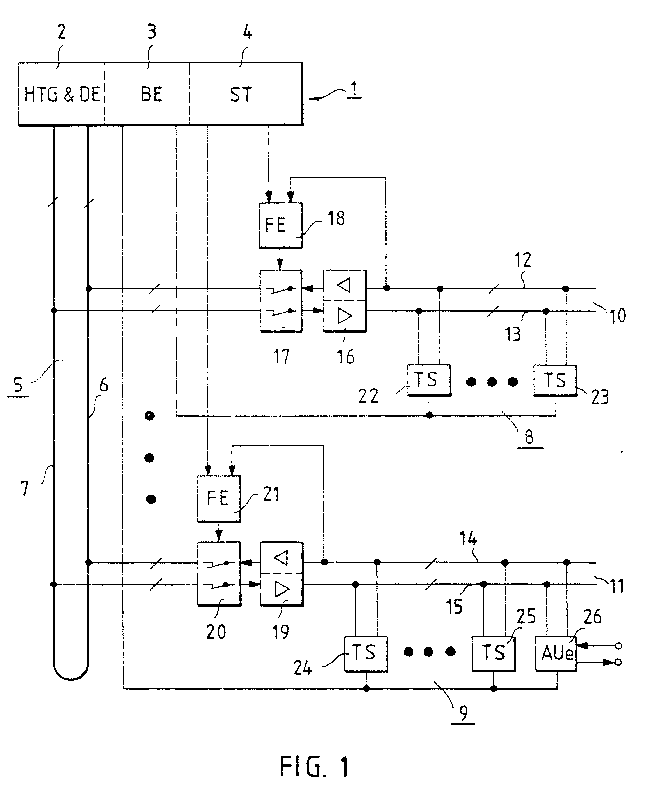

Die in Fig. 1 dargestellte Schaltungsanordnung enthält eine zentrale Steuereinrichtung 1, welche in drei Steuereinrichtungsbereiche 2, 3 und 4 unterteilt sein mag. Der Steuereinrichtungsbereich 2 mag für eine Signalgabe erforderliche Signalgeneratoren bzw. Hörtongeneratoren (HTG) sowie eine Diagnoseeinheit (DE) umfassen, mit deren Hilfe fehlerhafte Betriebsweisen der mit diesem Steuereinrichtungsbereich 2 verbundenen Schaltungsteile ermittelt werden können. Der Steuereinrichtungsbereich 3 mag eine Befehlssteuereinrichtung (BE) umfassen, mit deren Hilfe zu der in Fig. 1 dargestellten Schaltungsanordnung gehörende Anschlußstellen bzw. -schaltungen hinsichtlich ihres Zustands überwacht werden können. Dabei können die betreffenden Anschlußschaltungen von dem Steuereinrichtungsbereich 3 her gezielt angesteuert werden. Der noch erwähnte Steuereinrichtungsbereich 4 der zentralen Steuereinrichtung 1 mag eine Adressierungssteuerschaltung (ST) enthalten, mit deren Hilfe nacheinander einzelne Überwachungseinrichtungen der Schaltungsanordnung wirksam gesteuert werden können.

Zur Übertragung von Digital-Signalen, die insbesondere durch PCM-Signale gebildet sein mögen, dient bei der in Fig. 1 dargestellten Schaltungsanordnung im wesentlichen eine als Ringleitung 5 ausgeführte Multiplexleitung. Diese Ringleitung 5 weist einen Sendeleitungsteil 6 und einen Empfangsleitungsteil 7 auf. Jeder dieser beiden Leitungsteile 6, 7 umfaßt eine zumindest der Anzahl der jeweils gleichzeitig zu übertragenden Signalbits eines Digital-Signals entsprechende Anzahl von Einzelleitungen. Dies ist in Fig. 1 durch die betreffenden Leitungsteile 6, 7 schräg kreuzende kurze Striche angedeutet. Im Falle eines herkömmlichen PCM-Systems mit 32 Kanälen à acht Bits umfassen der Sendeleitungsteil 6 und der Empfangsleitungsteil 7 der Ringleitung 5 jeweils zumindest acht Einzelleitungen. Überdies kann jeder Leitungsteil dieser Ringleitung 5 noch zusätzlich eine Synchronisiersignalleitung und auch eine Taktleitung umfassen. Die jeweils einander entsprechenden Einzelleitungen des Sendeleitungsteiles 6 und des Empfangsleitungsteiles 7 der Ringleitung 5 sind am Ende dieser Ringleitung — welches Ende von dem Steuereinrichtungsbereich 2 entfernt ist — miteinander verbunden; dadurch bilden der Sendeleitungsteil 6 und der Empfangsleitungsteil 7 die eigentliche Ringleitung 5.

An der Ringleitung 5 sind jeweils eine Anzahl von Anschlußstellen umfassende Anschlußgruppen angeschlossen. In Fig. 1 sind zwei derartige Anschlußgruppen 8 und 9 angedeutet. Die Anschlußstellen dieser Anschlußgruppen mögen im vorliegenden Fall durch Teilnehmerstellen (TS) bzw. durch eine sogenannte Amtsübertragungseinrichtung (AUe) gebildet sein. Wie noch ersichtlich werden wird, sind diese Teilnehmerstellen und die Amtsübertragungseinrichtung so ausgelegt, daß sie Digital-Signale, und zwar insbesondere PCM-Signale, aufzunehmen bzw. abzugeben vermögen.

Die Anschlußgruppe 8 möge lediglich Teilnehmerstellen (TS) 22, 23 umfassen. Diese Teilnehmerstellen 22, 23 sind mit ihren Sendeausgängen gemeinsam an einer Sendegruppenschiene 12 einer diese Sendegruppenschiene 12 und eine Empfangsgruppenschiene 13 umfassenden Anschlußgruppen-Multiplexleitungsanordnung 10 angeschlossen. An der Empfangsgruppenschiene 13 dieser Multiplexleitungsanordnung 10 sind die Teilnehmerstellen 22, 23 mit Empfangseingängen angeschlossen. Die beiden Gruppenschienen 12, 13 der Multiplexleitungsanordnung 10 sind über eine Verstärkeranordnung 16 und eine Abschalteinrichtung 17 an dem Sendeleitungsteil 6 bzw. an dem Empfangsleitungsteil 7 der Ringleitung 5 angeschlossen. Zu diesem Zweck weisen die betreffenden Gruppenschienen 12, 13 ebenfalls eine zumindest der Anzahl der jeweils gleichzeitig zu übertragenden Signalbits eines Digital-Signals entsprechende Anzahl von Einzelleitungen auf, was wiederum durch einen kurzen Schrägstrich in der jeweiligen Gruppenschiene angedeutet ist. Zusätzlich können die betreffenden Gruppenschienen zu den einzelnen Anschlußstellen hinführende und diese steuernde Takt- und/oder Synchronisiersignalleitungen umfassen.

Die in Fig. 1 noch angedeutete Anschlußgruppe 9 umfaßt die Teilnehmerstellen 24, 25 und die bereits erwähnte Amtsübertragungseinrichtung 26. Diese Teilnehmerstellen 24, 25 und die Amtsübertragungseinrichtung 26 — welche so ausgebildet ist, daß sie Digital-Signale zu und/oder von anderen Signalaufnahme- bzw. Signalabgabeeinrichtungen zu übertragen gestattet — sind mit Sendeausgängen gemeinsam an einer Sendegruppenschiene 14 und mit Empfangseingängen gemeinsam an einer Empfangsgruppenschiene 15 angeschlossen. Die Sendegruppenschiene 14 und die Empfangsgruppenschiene 15 gehören zu einer weiteren Anschlußgruppen-Multiplexleitungsanordnung 11, die mit ihren Gruppenschienen 14, 15 über eine Verstärkeranordnung 19 und eine Abschalteinrichtung 20 an der Ringleitung 5 in entsprechender Weise angeschlossen ist, wie dies zuvor bezüglich der Anschlußgruppe 8 erläutert worden ist.

Jeder Anschlußgruppe ist gemäß Fig. 1 eine Überwachungseinrichtung (FE) zugehörig. Der Anschlußgruppe 8 ist dabei die Überwachungseinrichtung 18 zugehörig, und der Anschlußgruppe 9 ist die Überwachungseinrichtung 21 zugehörig. Diese Überwachungseinrichtungen 18, 21 sind jeweils mit der Sendegruppenschiene 12 bzw. 14 ihrer zugehörige Anschlußgruppe 8 bzw. 9 verbunden. Zum anderen sind die Überwachungseinrichtungen 18, 21 eingangsseitig mit dem Steuereinrichtungsbereich 4 der zentralen Steuereinrichtung 1 verbunden. Von diesem Steuereinrichtungsbereich 4 her können die Überwachungseinrichtungen 18, 21 nacheinander aufgerufen werden, um ihre Überwachungsfunktionen auszuführen. Diese Überwachungsfunktionen können darauf hinauslaufen, auf der jeweils zugehörigen Sendegruppenschiene 12 bzw. 14 festzustellen, ob für Verbindungszwecke an sich gesperrte Zeitschlitze auch tatsächlich frei sind; werden derartige Zeitschlitze als belegt festgestellt, so mag die jeweilige Überwachungseinrichtung ein entsprechendes Fehlermeldesignal abgeben. Hierauf wird weiter unten noch näher eingegangen werden.

Die zuvor betrachteten Überwachungseinrichtungen 18, 21 sind ausgangsseitig jeweils mit dem Steuereingang einer ihnen zugehörigen Abschalteinrichtung 17 bzw. 20 verbunden. Diese Abschalteinrichtungen 17, 20 sind in Fig. 1 als lediglich Schalter bzw. Relaiskontakte enthaltend dargestellt. Sie werden auf entsprechende Ansteuerung von der jeweils zugehörigen Überwachungseinrichtung 18 bzw. 21 oder von der zentralen Steuereinrichtung 1 her — nachdem eine von der zentralen Steuereinrichtung 1 durch Kommandogabe versuchte Fehlerbeseitigung in den infragekommenden Anschlußstellen erfolglos geblieben ist — ihre jeweils zugehörige Anschlußgruppe 8 bzw. 9 von der Ringleitung 5 abtrennen. Gegebenenfalls kann dabei so vorgegangen sein, daß lediglich der Sendezweig der jeweiligen Anschlußgruppen 8 bzw. 9 aufgetrennt wird, so daß also zu der betreffenden Anschlußgruppe gehörenden Anschlußstellen (Teilnehmerstellen oder Amtsübertragungseinrichtungen) für einen ankommenden Verbindungsverkehr noch erreichbar sein können.

Die in Fig. 1 dargestellten Anschlußstellen — das sind die Teilnehmerstellen 22, 23, 24, 25 und die Amtsübertragungseinrichtung 26 — sind noch mit gesonderten Anschlüssen an dem Steuereinrichtungsbereich 3 der zentralen Steuereinrichtung 1 angeschlossen. Wie oben bereits erwähnt, mag dieser Steuereinrichtungsbereich 3 eine Befehlssteuerschaltung sein, welche die einzelnen Anschlußschaltungen nacheinander auf ihren Zustand bzw. auf Verbindungswünsche abfragt. Hierzu gehören Verbindungsaufbau- und Verbindungsabbauwünsche. Die Abfrage der einzelnen Anschlußstellen kann dabei zyklisch erfolgen. Vorzugsweise ist dabei für jede Anschlußgruppe eine individuelle Befehlssammelleitung vorgesehen, die für eine serielle Bitübertragung ausgelegt ist. In diesem Fall können die einzelnen Anschlußstellen 22 bis 26 der Schaltungsanordnungen durch Abgabe entsprechender Anschlußstellenadressen über die jeweilige Befehlssammelleitung individuell angesteuert werden, um daraufhin erforderliche Zustandssignale über diese Befehlssammelleitung an die zentrale Steuereinrichtung 1 abzugeben.

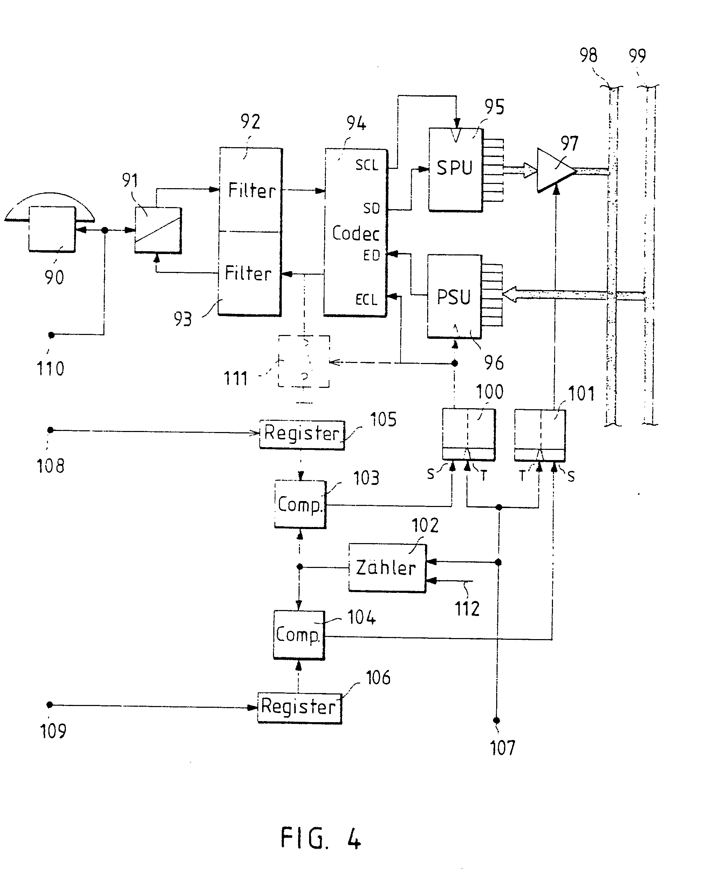

Die vorstehend erläuterte, in Fig. 1 dargestellte Schaltungsanordnung arbeitet wie folgt. Da sowohl die die Ringleitung 5 bildenden Leitungsteile 6 und 7 als auch die Gruppenschienen 12, 13 bzw. 14, 15 der Anschlußgruppen-Multiplexleitungsanordnungen 10, 11 jeweils eine zumindest der Anzahl der jeweils gleichzeitig zu übertragenden Signalbits eines Digital-Signals entsprechende Anzahl von Einzelleitungen aufweisen, ist also jeweils eine Parallelübertragung der die Digital-Signale bildenden Signalbits, wie der Bits von PCM-Signalen, möglich. Die zwischen miteinander in Verbindung zu bringenden bzw. befindlichen Anschlußstellen zu übertragenden Digital-Signale werden mit ihren jeweiligen Signalbits parallel nach dem Zeitmultiplexprinzip übertragen, und zwar in zyklisch wiederholt in aufeinanderfolgenden Pulsrahmen auftretenden Zeitschlitzen von den betreffenden Anschlußstellen zugeteilten sogenannten Pulsen. Dabei dient der der jeweils einen Anschlußstelle als Sendepuls zugeteilte Puls der jeweils anderen Anschlußstelle als Empfangspuls. Auf die Zuteilung derartiger Pulse zu den einzelnen Anschlußstellen wird weiter unten im Zusammenhang mit Fig. 4 noch näher eingegangen werden.

Um die hier maßgebenden zeitlichen Zusammenhänge zu verdeutlichen, sei von einem PCM-System mit 32 Übertragungskanälen à 8 Bits ausgegangen. In einem derartigen PCM-System stehen innerhalb jedes der aufeinanderfolgenden Pulsrahmen 32 Zeitfächer bzw. Zeitkanäle à 8 Bits zur Verfügung. Bei einer Pulsrahmendauer von 125 µs besitzen also die zyklisch wiederholt in aufeinanderfolgenden Pulsrahmen auftretenden Zeitfächer eine Wiederholungsrate von 8 kbit/s. Die aufeinanderfolgenden Zeitfächer treten mit einer Wiederholungsrate von 32 · 8 kbit/s, also mit 256 kbit/s auf. Die in den Zeitfächern eines Pulsrahmens insgesamt vorhandenen Bits treten mit einer Wiederholungsrate von 8 · 32 · 8 kbit/s, also mit 2,048 Mbit/s auf. Mit Rücksicht auf die bei der Schaltungsanordnung gemäß Fig. 1 erfolgende Parallelübertragung der das jeweilige Digital-Signal bildenden Signalbits stehen also unter Zugrundelegung eines PCM-Systems der vorstehend betrachteten Art auf der Ringleitung 5 insgesamt 256 Zeitschlitze für eine Signalübertragung zur Verfügung. Dies bedeutet, daß unter Zugrundelegung normaler Verkehrsbelastungen ohne weiteres ca. 1000 Teilnehmerstellen an einer derartigen Schaltungsanordnung angeschlossen sein können. Jeder derartige Zeitschlitz (1 Bit breit) entspricht bei Verwendung einer Ringleitung mit acht Einzelleitungen einer Übertragungsrate von 8 · 8 kBit = 64 kBit. An dieser Stelle sei noch bemerkt, daß von den auf der Ringleitung 5 insgesamt belegbaren Pulsen zumindest ein Puls als Sendepuls Signalgeneratoren fest zugeordnet ist, die für eine Signalisierungsgabe erforderlich sind und die an der Ringleitung 5 angeschlossen sein mögen, wie dies im Zusammenhang mit dem Steuereinrichtungsbereich 2 oben erwähnt worden ist. Während der Zeitspannen des Auftretens der Zeitschlitze eines derartigen Sendepulses dürften auf den Sendegruppenschienen 12, 14 der Anschlußgruppen-Multiplexleitungsanordnungen 10, 11, keine Signale übertragen werden, da derartige Signale nach ihrer Abgabe an den Sendeleitungsteil 6 der Ringleitung 5 zu einer Verfälschung bzw. Veränderung der von den entsprechend vorgesehenen Signalgeneratoren abgegebenen Signalisierungszeichen führen könnten. Im vorliegenden Fall wird jedoch der Umstand, daß die Zeitschlitze des betreffenden Sendepulses auf den Sendegruppenschienen der Anschlußgruppen-Multiplexleitungsanordnungen nicht durch Signale belegt sein dürfen, zur Bewertung der Funktionsfähigkeit oder Fehlerhaftigkeit der jeweiligen Anschlußgruppe 8 bzw. 9 herangezogen. Wie oben bereits erwähnt, wird durch die der jeweiligen Anschlußgruppe 8, 9 zugehörige Überwachungseinrichtung 18 bzw. 21 gerade überprüft, ob auf der jeweiligen Sendegruppenschiene Zeitschlitze belegt sind, die für Verbindungszwecke gerade nicht zur Verfügung stehen.

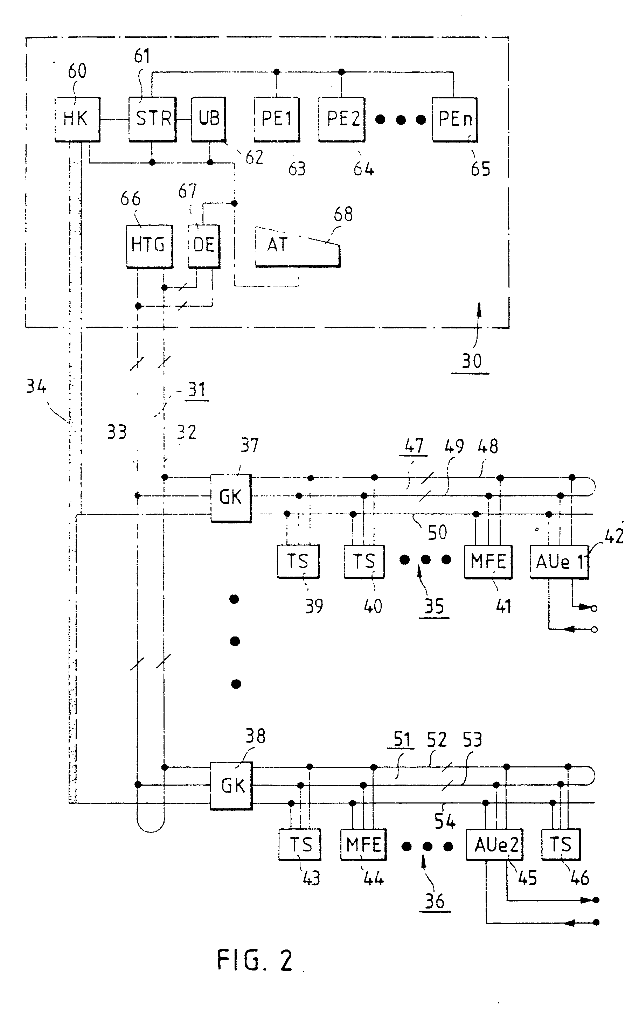

In Fig. 2 ist eine Modifikation der in Fig. 1 dargestellten Schaltungsanordnung veranschaulicht. Die in Fig. 2 dargestellte Schaltungsanordnung umfaßt eine zentrale Steuereinrichtung 30, eine Ringleitung 31 mit einem Sendeleitungsteil 32 und einem Empfangsleitungsteil 33, eine Befehls- bzw. Steuerleitungsanordnung 34 und Anschlußgruppen 35, 36. Der Sendeleitungsteil 32 und der Empfangsleitungsteil 33 der Ringleitung 31 weisen auch im vorliegenden Fall jeweils eine zumindest der Anzahl der jeweils gleichzeitig zu übertragenden Signalbits eines Digital-Signals entsprechende Anzahl von Einzelleitungen auf, was durch die betreffenden Leitungsteile kreuzende kurze Schrägstriche angedeutet ist. Der Sendeleitungsteil 32 und der Empfangsleitungsteil 33 der Ringleitung 31 sind mit entsprechenden Einzelleitungen an ihren einen Enden miteinander verbunden.

Die in Fig. 2 dargestellte zentrale Steuereinrichtung 30 enthält einen sogenannten Hauptkoppler (HK) 60, der aufeinanderfolgend die einzelnen Anschlußgruppen 35, 36 ansteuert und von diesen Befehle bzw. Überwachungsinformationen aufnimmt und an diese Steuerinformationen abgibt. Der Hauptkoppler 60 ist mit einem Steuerrechner (STR) 61 verbunden, dem eine Überwachungseinheit (UB) 62 zugehörig sein mag. Der Hauptkoppler 60, der Steuerrechner 61 und die Überwachungseinheit 62 können gegebenenfalls doppelt vorgesehen sein.

Der Steuerrechner 61 ist gemäß Fig. 2 mit einer Anzahl von peripheren Einheiten (PE1, PE2 ... PEn) 63, 64, 65 verbunden. Bei diesen peripheren Einrichtungen kann es sich um Datenspeicher bzw. um Einrichtungen handeln, mit denen der Steuerrechner 61 zur Erfüllung seiner Aufgaben zusammenzuarbeiten hat.

Der Hauptkoppler 60, der Steuerrechner 61 und die Überwachungseinheit 62 sind ferner mit einer Diagnoseeinheit 67 verbunden, die mit weiteren Anschlüssen mit dem Sendeleitungsteil 32 und dem Empfangsleitungsteil 33 der Ringleitung 31 verbunden ist. Ferner sind der Hauptkoppler 60, der Steuerrechner 61 und die Überwachungseinheit 62 mit einem Überwachungs- und Anzeigetisch (AT) 68 verbunden. Mit dem Sendeleitungsteil 32 und mit dem Empfangsleitungsteil 33 der Ringleitung 31 ist gemäß Fig. 2 noch ein sogenannter Hörtongenerator (HTG) 66 verbunden, der als Teil der zentralen Steuereinrichtung 30 angedeutet ist.

Wie bei der in Fig. 1 dargestellten Schaltungsanordnung sind auch bei der in Fig. 2 dargestellten Schaltungsanordnung an der Ringleitung 31 die einzelnen Anschlußgruppen 35, 36 sowohl mit ihrer jeweligen Sendeseite als auch mit ihrer jeweiligen Empfangsseite angeschlossen. Im vorliegenden Fall erfolgt dieser Anschluß jedoch über sogenannte Gruppenkoppler (GK), von denen der Anschlußgruppe 35 ein Gruppenkoppler 37 und der Anschlußgruppe 36 ein Gruppenkoppler 38 zugehörig sein mag. Im Prinzip handelt es sich bei diesen Gruppenkopplern 37, 38 um Schaltungen, welche die Schaltungseinrichtungen 16, 17, 18 bzw. 19, 20, 21 der in Fig. 1 dargestellten Schaltungsanordnung umfassen. Die betreffenden Gruppenkoppler 37, 38 verbinden nun nicht entsprechende Gruppenschienen bzw. gruppenindividuelle Leitungen mit dem Sendeleitungsteil 32 und mit dem Empfangsleitungsteil 31 der Ringleitung 31, sondern sie sind überdies mit wenigstens einem weiteren Anschluß an der Leitungsanordnung 34 angeschlossen.

Der der Anschlußgruppe 35 zugehörige Gruppenkoppler 37 ist dabei mit einer Ringleitung 47 verbunden, die einen Sendeleitungsteil 48 und einen Empfangsleitungsteil 49 umfassen mag. Der Sendeleitungsteil 48 und der Empfangsleitungsteil 49 der Ringleitung 47 weisen ebenfalls jeweils eine zumindest der Anzahl der jeweils gleichzeitig zu übertragenden Signalbits eines Digital-Signals entsprechende Anzahl von Einzelleitungen auf, von denen einander entsprechenden Einzelleitungen an den einen Leitungsenden miteinander verbunden oder mit dem jeweils maßgebenden Wellenwiderstand abgeschlossen sind. Das Vorhandensein derartiger Einzelleitungen ist durch den Sendeleitungsteil und den Empfangsleitungsteil kreuzende kurze Schrägstriche angedeutet. Neben der Ringleitung 47 ist der Gruppenkoppler 37 noch mit einer Steuerbefehlsleitung 50 verbunden, die für eine serielle Datenübertragung ausgelegt sein mag.

An dem Sendeleitungsteil 48 der Ringleitung 47 mögen die zu der Anschlußgruppe 35 gehörenden Anschlußstellen mit ihrem jeweiligen Sendeausgang angeschlossen sein. Bei diesen Anschlußstellen handelt es sich einmal um Teilnehmerstellen (TS), von denen zwei Teilnehmerstellen 39, 40 angedeutet sind. Ferner handelt es sich um einen Mehrfrequenzempfänger (MFE) 41 und um eine sogenannte Amtsübertragungseinrichtung (AUe1) 42, die Verbindungen zu anderen Signalaufnahme- bzw. Signalabgabeeinrichtung herzustellen gestattet, wie beispielsweise zu einem anderen Vermittlungssystem. Der Mehrfrequenzempfänger 41 kann beispielsweise eine Datenstation sein. Die zu der Anschlußgruppe 35 gehörenden Anschlußstellen 39, 40, 41, 42 sind mit ihrem jeweiligen Empfangseingang an dem Empfangsleitungsteil 49 der Ringleitung 47 angeschlossen. Mit einem Steuerungs- bzw. Abfrageanschluß sind die betreffenden Anschlußstellen 39 bis 42 an der Steuerbefehlsleitung 50 angeschlossen.

Mit dem der Anschlußgruppe 36 zugehörigen Gruppenkoppler 38 ist eine Ringleitung 51 verbunden, die einen Sendeleitungsteil 52 und einen Empfangsleitungsteil 53 aufweist. Auch diese beiden Leitungsteile 52, 53 weisen jeweils eine zumindest der Anzahl der jeweils gleichzeitig zu übertragenden Signalbits eines Digital-Signals entsprechende Anzahl von Einzelleitungen auf, was durch einen den jeweiligen Leitungsteil kreuzenden kurzen Schrägstrich angedeutet ist. Die einander entsprechenden einzelnen Leitungen dieser beiden Leitungsteile 52, 53 sind an ihren einen Enden ebenfalls miteinander verbunden, oder in bereits angegebener Weise abgeschlossen. Mit dem Sendeleitungsteil 52 der Ringleitung 51 sind die zu der Anschlußgruppe 36 gehörenden Anschlußstellen 43, 44, 45 und 46 mit ihrem jeweiligen Sendeausgang verbunden. Die Anschlußstellen 43 und 46 mögen Teilnehmerstellen sein; die Anschlußstelle 44 mag durch einen Mehrfrequenzempfänger bzw. eine Datenstation gebildet sein, und die Anschlußstelle 45 mag eine weitere Amtsübertragungseinrichtung AUe2 sein. Diese Anschlußstellen 43 bis 46 sind mit ihren Empfangseingängen an dem Empfangsleitungsteil 53 der Ringleitung 51 angeschlossen. Mit Steueranschlüssen sind die betreffenden Anschlußstellen 43 bis 46 an der Steuerbefehlsleitung 54 angeschlossen.

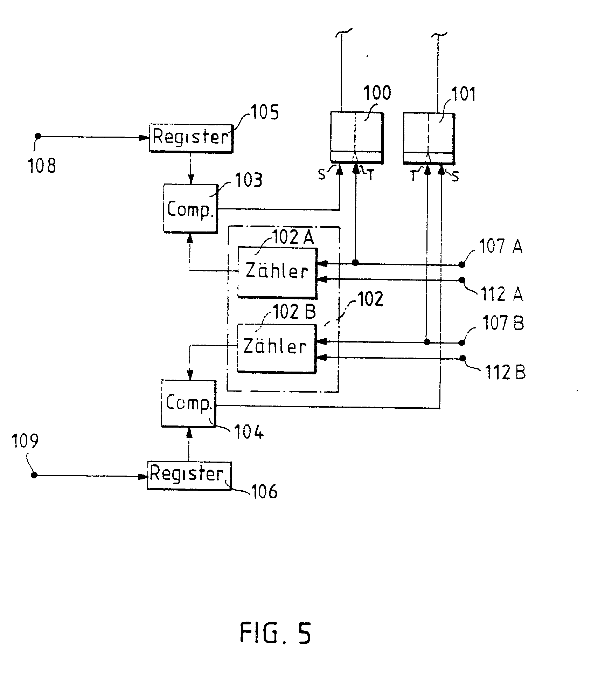

Im Prinzip arbeitet die in Fig. 2 dargestellte Schaltungsanordnung in der gleichen Weise wie die in Fig. 1 dargestellte Schaltungsanordnung. Unter Zugrundelegung des im Zusammenhang mit Fig. 1 erläuterten Zahlenbeispiels können somit auf der Ringleitung 31 und auf den Ringleitungen 47 und 51 insgesamt 256 Pulse für die Verbindung einer entsprechenden Anzahl von Anschlußstellen vorhanden sein. Tatsächlich wird jedoch auch hier zumindest ein derartiger Puls für die Signalisierungsgabe reserviert, so daß er für die eigentliche Signalübertragung zwischen zwei Anschlußstellen nicht verfügbar ist. Wie im Zusammenhang mit der in Fig. 1 dargestellten Schaltungsanordnung bereits erläutert, dient auch hier der einer Anschlußstelle als Sendepuls zugeteilte Puls der mit der betreffenden Anschlußstelle in Verbindung befindlichen anderen Anschlußstelle als Empfangspuls, und der dieser anderen Anschlußstelle als Sendepuls zugeteilte Puls dient der erstgenannten Anschlußstelle als Empfangspuls. Bei auf den Ringleitungen 31, 47 und 51 insgesamt zur Verfügung stehenden 256 Pulsen sind also insgesamt theoretisch 128 Verbindungen zwischen jeweils zwei Anschlußstellen herstellbar. Auf die Zuteilung der einzelnen Pulse als Sendepulse bzw. Empfangspulse zu den einzelnen Anschlußstellen wird weiter unten im Zusammenhang mit Fig. 4 und Fig. 5 noch näher eingegangen werden.

Im Unterschied zu der in Fig. 1 dargestellten Schaltungsanordnung können die zu der jeweiligen Anschlußgruppe bei der Schaltungsanordnung gemäß Fig. 2 gehörenden Anschlußstellen gegebenenfalls auch dann noch untereinander verbunden werden bzw. sein, wenn der zugehörige Gruppenkoppler defekt ist. Die von derartigen Anschlußstellen an den Sendeleitungsteil der zugehörigen Ringleitung 47 bzw. 51 abgegebenen Digital-Signale treten nämlich auch auf dem Empfangsleitungsteil dieser Ringleitung auf. Dadurch können diese Signale von zu der betreffenden Anschlußgruppe gehörenden Anschlußstellen aufgenommen werden, ohne daß sie — wie im Falle der Fig. 1 — über die mit der zentralen Steuereinrichtung verbundene Ringleitung übertragen werden. Diese zuletzt erwähnte Eigenschaft der in Fig. 2 dargestellten Schaltungsanordnung kann im übrigen auch dazu ausgenutzt werden, bei einem sogenannten Internverkehr zwischen Anschlußstellen ein und derselben Anschlußgruppe deren Gruppenkoppler zu sperren, so daß dann ein und derselbe Puls in verschiedenen Anschlußgruppen für die Signalübertragung ausgenutzt werden kann.

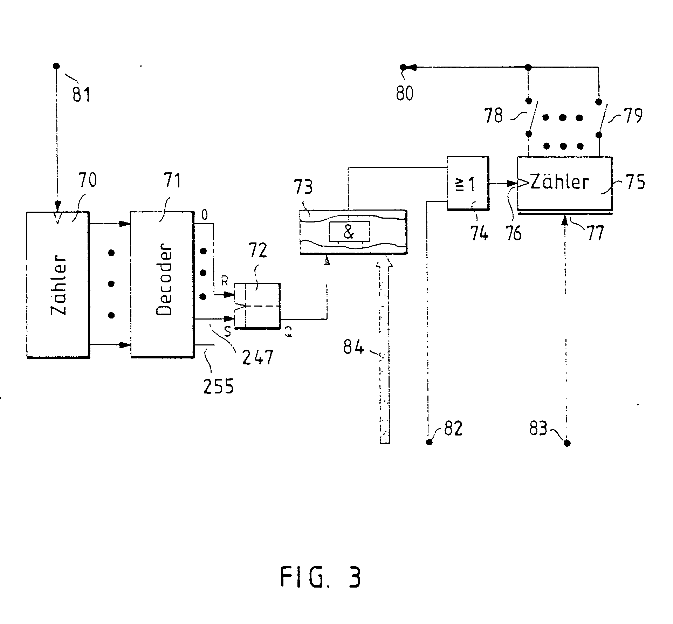

In Fig. 3 ist in einem Blockschaltbild ein möglicher Aufbau einer der in Fig. 1 angedeuteten Überwachungseinrichtungen 18, 21 dargestellt. Die in Fig. 3 dargestellte Schaltungsanordnung wird als Überwachungsschaltungsanordnung auch in den Gruppenkopplern 37, 38 der in Fig. 2 dargestellten Schaltungsanordnung enthalten sein. Die in Fig. 3 dargestellte Schaltungsanordnung weist einen Zähler 70 auf, der von einem Anschluß 81 her Taktimpulse im Rhythmus der Zeitschlitze zugeführt erhält, die innerhalb jedes Pulsrahmens auftreten. Unter Zugrundelegung des im Zusammenhang mit der Schaltungsanordnung gemäß Fig. 1 gegebenen Zahlenbeispiels erhält der Zähler 70 innerhalb eines Pulsrahmens von 125 µs insgesamt 256 Impulse zugeführt.

An der Ausgangsseite des Zählers 70 ist ein Decoder 71 mit seiner Eingangsseite angeschlossen. Dieser Decoder 71 weist insgesamt 256 Ausgänge 0 bis 255 auf. Er gibt auf seine eingangsseitige Ansteuerung hin jeweils nur an einem seiner Ausgänge ein Ausgangssignal (Binärsignal »H«) ab.

Mit dem Ausgang 0 des Decoders 71 ist ein bistabiles Kippglied 72 mit seinem Rücksetzeingang R verbunden. Mit seinem Setzeingang S ist das bistabile Kippglied 72 am Ausgang 247 des Decoders 71 angeschlossen. Mit einem Ausgang Q ist das bistabile Kippglied 72 an der einen Eingangsseite einer Vergleichsanordnung 73 angeschlossen, die mit einer weiteren Eingangsseite an einer Sammelschiene 84 angeschossen sein mag, bei der es sich um eine der Sendegruppenschienen 12, 14 der Schaltungsanordnung gemäß Fig. 1 oder um einen der Sendeleitungsteile 48, 52 der Schaltungsanordnung gemäß Fig. 2 handeln mag. Damit überprüft die Vergleicheranordnung 73 zum Zeitpunkt des Auftretens der Pulse bzw. Zeitschlitze 247 bis einschließlich 255, ob auf der betreffenden Sammelschiene 84 Signale auftreten. Wie oben ausgeführt, sind die betreffenden Pulse bzw. Zeitschlitze nicht für eine Signalübertragung zwischen Anschlußstellen der Schaltungsanordnung zu benutzen; sie werden vielmehr für eine Signalisierungsgabe benutzt. Deshalb dürfen zu den betreffenden Zeitschlitzen bzw. Pulsen auf der Sammelschiene 84 an sich keine Signale auftreten. Wird dennoch ein derartiges Signal festgestellt, so gibt die Vergleicheranordnung 73 ausgangsseitig ein Binärsignal »H« als Ausgangssignal ab. Ein derartiges Ausgangssignal vermag die Vergleicheranordnung 73 lediglich bis zu einem Zeitpunkt abzugeben, zu dem das bistabile Kippglied 72 wieder zurückgesetzt wird. Dies ist zu dem Zeitpunkt der Fall, zu dem der Puls bzw. Zeitschlitz 0 auftritt. In diesem Fall gibt der Decoder 71 von seinem Ausgang 0 ein entsprechendes Rücksetzsignal an den Rückstelleinang R des bistabilen Kippgliedes 72 ab.

An dem bereits erwähnten Ausgang der Vergleicheranordnung 73 ist ein ODER-Glied 74 mit einem Eingang angeschlossen. Mit einem weiteren Eingang ist das ODER-Glied 74 an einem Schaltungspunkt 82 angeschlossen, auf den nachstehend noch eingegangen werden wird. Mit seinem Ausgang ist das ODER-Glied 74 an einem Zähleingang 76 eines Zählers 75 angeschlossen. Dieser Zähler 75 ist mit einem Rückstelleingang 77 an einem Schaltungspunkt 83 angeschlossen, auf den ebenfalls noch eingegangen werden wird. Die bei verschiedenen Zählerstellungen des Zählers 75 ein Ausgangssignal (Binärsignal »H«) führenden Zählerausgänge sind über Schalter 78, 79 gemeinsam an einem Schaltungspunkt 80 angeschlossen. Je nachdem, welcher der Schalter 78, 79 geschlossen ist, wird bei einer mehr oder weniger großen Zählerstellung des Zählers 78 ein Ausgangssignal an den Anschlußpunkt 80 abgegeben. Bei diesem Ausgangssignal (Binärsignal »H«) mag es sich um das in Verbindung mit der Überwachungseinrichtung 18 bzw. 21 gemäß Fig. 1 erwähnte Fehlermeldesignal handeln, welches zur Steuerung der zugehörigen Abschalteinrichtung dient. Durch Auswahl des zu schließenden Schalters der vorgesehenen Schalter 78, 79 ist somit die Anzahl der Fehler festlegbar, nach deren Auftreten eine entsprechende Abschaltmaßnahme durchgeführt wird.

Der Zähler 75 wird in seiner Zählerstellung nun nicht nur dann weitergeschaltet, wenn vom Ausgang der Vergleicheranordnung 73 ein entsprechendes Ausgangssignal (Binärsignal »H«) abgegeben wird, sondern auch dann, wenn dem Anschluß 82 ein entsprechendes Fehlermeldesignal zugeführt wird. Dem Anschluß 82 können daher von weiteren, in Fig. 3 nicht dargestellten Fehlerüberwachungseinrichtungen entsprechende Fehlermeldesignale zugeführt werden. Dem Anschluß 83 können Rückstellsignale zur Zurückstellung des Zählers 75 in einen definierten Ausgangszustand zugeführt werden. Derartige Rückstellsignale können beispielsweise dann an den Anschluß 83 abgegeben werden, wenn während einer bestimmten Anzahl von Pulsrahmen keine Fehler aufgetreten sind. Im einfachsten Fall kann ein derartiges Rückstellsignal abgegeben werden, nachdem in einem Pulsrahmen kein Fehler aufgetreten ist. Zu diesem Zweck könnte mit dem Anschlußpunkt 83 der Ausgang eines UND-Gliedes verbunden sein, welches mit einem Eingang am Ausgang 255 des Decoders 71 und mit einem weiteren Eingang am Ausgang ($\overline{Q}$) eines bistabilen Kippgliedes angeschlossen ist, das mit einem Rücksetzeingang am Ausgang 0 des Decoders und mit einem Setzeingang am Ausgang des oben erwähnten ODER-Gliedes 74 angeschlossen ist. Das am Anschlußpunkt 83 ausgangsseitig angeschlossene UND-Glied gibt dann am Ende jedes Pulsrahmens ein Rückstellsignal (Binärsignal »H«) an den Zähler 75 nur dann ab, wenn innerhalb dieses Pulsrahmens kein Zählerfortschaltsignal aufgetreten ist.

In Fig. 4 ist ein möglicher Aufbau einer der in Fig. 1 und 2 angedeuteten Anschlußstelle veranschaulicht. Bei der in Fig. 4 dargestellten Anschlußstelle mag es sich um eine Fernsprech-Teilnehmerstelle handeln, deren eigentliche Teilnehmerstation 90 für die Abgabe und Aufnahme von Analog-Signalen ausgelegt ist. Diese Teilnehmerstation 90 ist über eine Gabelschaltung 91 mit einem sendeseitigen Filter 92 und mit einem empfangsseitigen Filter 93 verbunden. Diese Filter 92, 93 mögen Tiefpaßfilter sein. Der Ausgang des Filters 92 und der Eingang des Filters 93 sind mit entsprechenden Anschlüssen einer Codier-Decodier-Anordnung 94, Codec genannt, verbunden. Dieser Codec setzt die ihm eingangsseitig zugeführten Analog-Signale in jeweils acht Bits umfassenden PCM-Signale um und gibt auf ihm zugeführte entsprechende PCM-Signale hin ausgangsseitig Analog-Signale ab.

Der Codec 94 ist mit einem die PCM-Signalbits seriell abgebenden Signalausgang SD mit dem Eingang eines Serien-Parallel-Umsetzers 95 verbunden, bei dem es sich um ein Schieberegister handeln mag. Einem gesonderten Takteingang dieses Serien-Parallel-Umsetzers 95 werden entsprechende Taktimpulse von einem Taktausgang SCL des Codecs 94 zugeführt. Mit seinen acht parallelen Ausgängen ist der Serien-Parallel-Umsetzer 95 über eine Trennschaltungsanordnung 97 mit einer Sendesammelschiene 98 verbunden, bei der es sich um eine der in Fig. 1 angedeuteten Sendegruppenschienen 12, 14 oder um einen der Sendeleitungsteile 48, 52 der Schaltungsanordnung gemäß Fig. 2 handeln kann.

Mit einem PCM-Signalbits seriell aufnehmenden Eingang ED ist der Codec 94 am Serienausgang eines Parallel-Serien-Umsetzers 96 angeschlossen, bei dem es sich ebenfalls um ein Schieberegister handeln kann. Dieser Parallel-Serien-Umsetzer 96 ist mit seinen acht parallelen Eingängen an einer Empfangssammelschiene 99 angeschlossen, bei der es sich um eine der Empfangsgruppenschienen 13, 15 bei der Schaltungsanordnung gemäß Fig. 1 oder um einen der Empfangsleitungsteile 49, 53 der Schaltungsanordnung gemäß Fig. 2 handeln kann. Der Parallel-Serien-Umsetzer 96 ist mit einem nicht näher bezeichneten Takteingang zusammen mit einem Takteingang ECL des Codecs 94 am Ausgang eines bistabilen Kippgliedes 100 angeschlossen, das zusammen mit weiteren noch zu betrachtenden Einrichtungen 101 bis 106 eine der betreffenden Teilnehmerstelle zugehörige dezentrale Haltesatzschaltung bildet. Dieses bistabile Kippglied 100 ist mit einem Setzeingang S am Ausgang eines Vergleichers (Comp) 103 angeschlossen. Mit einem Takteingang T ist das bistabile Kippglied 100 an einem Anschlußpunkt 107 angeschlossen, dem Taktimpulse im Rhythmus der Zeitschlitze bzw. Pulse zugeführt werden, die auf den Ringleitungen bei den Schaltungsanordnungen gemäß Fig. 1 und 2 maßgebend sind.

Mit dem zuvor erwähnten Schaltungspunkt 107 ist ferner ein weiteres bistabiles Kippglied 101 mit einem Takteingang T verbunden. Dieses bistabile Kippglied 101 ist mit einem Setzeingang S am Ausgang eines weiteren Vergleichers (Comp) 104 angeschlossen. Mit einem Ausgang ist das betreffende bistabile Kippglied 101 an einem Steuereingang der Trennschaltungsanordnung 97 angeschlossen.

Die beiden erwähnten Vergleicher 103 und 104 sind mit ihren einen Eingängen gemeinsam am Ausgang eines Zählers 102 angeschlossen, der eingangsseitig ebenfalls an dem Anschlußpunkt 107 angeschlossen und über seinen Eingang 112 mit der Synchronisiersignalleitung verbunden ist. Mit einer weiteren Eingangsseite ist der Vergleicher 103 an der Ausgangsseite eines Registers (Reg) 105 angeschlossen, welches eingangsseitig an einem Schaltungspunkt 108 angeschlossen ist. Mit seiner anderen Eingangsseite ist der Vergleicher 104 an der Ausgangsseite eines weiteren Registers 106 angeschlossen, welches eingangsseitig an einem Schaltungspunkt 109 angeschlossen ist. Die beiden Vergleicher 103, 104 vergleichen somit die Zählerstellung des Zählers 102 mit dem Inhalt des jeweiligen Registers 105 bzw. 106. Die in den beiden Registern 105 und 106 enthaltenen Codekombinationen stellen gewissermaßen Pulsadressen dar. Die im Register 106 jeweils enthaltene Codekombination stellt dabei eine Sendepulsadresse dar, und die im Register 105 enthaltene Codekombination stellt eine Empfangspulsadresse dar. Diese Pulsadressen bezeichnen also jene Pulse, die der betreffenden Teilnehmerstelle als Sendepuls bzw. Empfangspuls zugeteilt sind. Mit diesen Pulsadressen wird die jeweilige Zählerstellung des Zählers 102 vergleichen, der als zyklisch betriebener Zähler während der Dauer jedes der auf den Ringleitungen gemäß Fig. 1 und 2 maßgebenden Pulsrahmen in eine der Anzahl der auf diesen Ringleitungen jeweils für eine Signalübertragung benutzbaren Pulse entsprechende Anzahl von Zählerstellungen einstellbar ist.

Bei Feststellen einer Übereinstimmung zwischen den jeweils miteinander verglichenen Signalen bzw. Codekombinationen gibt der jeweilige Vergleicher 103 bzw. 104 ausgangsseitig ein solches Ausgangssignal (Binärsignal »H«) ab, auf dessen Auftreten hin in Verbindung mit einem Taktimpuls das zugehörige bistabile Kippglied 100 bzw. 101 derart umgesteuert wird, daß es ausgangsseitig ein Binärsignal »H« abgibt. Bei Fehlen eines derartigen Eingangssignals und Auftreten eines Taktimpulses bei dem jeweiligen bistabilen Kippglied 100 bzw. 101 gelangt dieses wieder in seinen anderen Kippzustand zurück.

Die den Registern 105, 106 zuzuführenden Pulsadressen werden den Anschlußpunkten 108, 109 von der zentralen Steuereinrichtung gemäß Fig. 1 oder gemäß Fig. 2 zugeführt. Die die betreffenden Pulsadressen bildenden Adressenbits werden dabei seriell über entsprechende Leitungen zugeführt.

Bei der in F i g. 4 dargestellten Schaltungsanordnung ist die Teilnehmerstation 90 noch mit einem Anschlußpunkt 110 verbunden. Mit diesem Anschlußpunkt 110 kann eine Teilnehmerüberwachungsschaltung verbunden sein, die pro Anschlußgruppe der in Fig. 1 oder in Fig. 2 dargestellten Schaltungsanordnung vorgesehen sein kann. Bei der in Fig. 1 dargestellten Schaltungsanordnung wird eine derartige Überwachungsschaltung in dem Steuereinrichtungsteil 3 der zentralen Steuereinrichtung 1 enthalten sein, und bei der in Fig. 2 dargestellten Schaltungsanordnung kann diese Überwachungsschaltung in dem jeweiligen Gruppenkoppler 37 bzw. 38 enthalten sein.

Bei der in Fig. 4 dargestellten Schaltungsanordnung ist ferner zwischen dem Analog-Signalausgang des Codecs 94 und dem Eingang des empfangsseitigen Filters 93 ein Tastschalter 111 durch gestrichelte Linien angedeutet, der die betreffende Verbindung zwischen dem Codec und dem Filter 93 nach Masse bzw. Erde hin zu schalten gestattet. Zu diesem Zweck werden dem betreffenden Tastschalter 111 Steuersignale zugeführt, die von den Ausgangsimpulsen des bistabilen Kippgliedes 100 abgeleitet sein mögen, wozu beispielsweise zwischen dem· Ausgang des betreffenden bistabilen Kippgliedes und dem Betätigungseingang des Tastschalters 111 ein Zeitglied enthalten sein kann. Das Schließen des Tastschalters 111 hat zur Folge, daß ein vom Ausgang des Codecs 94 abgegebene Analog-Signal nicht während der Dauer von praktisch einem Pulsrahmen dem Filter 93 zugeführt wird, sondern nur während einer demgegenüber kürzeren Zeitspanne. Damit eignet sich die in Fig. 4 dargestellte Schaltungsanordnung besonders gut für die Einbeziehung einer so aufgebauten Teilnehmerstelle in eine Konferenzgesprächsverbindung. Bei einer derartigen Konferenzgesprächsverbindung brauchen den einzelnen Teilnehmerstellen lediglich noch den Sendeimpulsen der jeweils übrigen, in die betreffende Konferenzgesprächsverbindung einbezogenen Teilnehmerstellen entsprechende Empfangspulse zugeteilt zu werden. Bezogen auf den in Fig. 4 gezeigten Schaltungsaufbau bedeutet dies, daß dem Register 105 entsprechende Register zusätzlich bereitzustellen wären, die alle ausgangsseitig mit dem Vergleicher 103 zu verbinden wären. In diesem Fall würde der Vergleicher 103 während der Dauer jedes Pulsrahmens mehrmals ein entsprechendes Ausgangssignal (Binärsignal »H«) abgeben und damit in einer entsprechenden Häufigkeit auf der Empfangssammelschiene 99 auftretende PCM-Signale dem Codec 94 zuführen. Nach Abgabe des jedem derartigen Digital-Signal entsprechenden Analog-Signals von dem Codec 94 an das Filter 93 ist dann der Schalter 111 kurzzeitig zu schließen. Bezogen auf einen Pulsrahmen findet somit eine Addition der den jeweils übertragenen Digital-Signalen entsprechenden Analog-Signale in der Teilnehmerstelle, d. h. in dem Filter 93 statt. Damit findet also innerhalb jedes Pulsrahmens eine Mehrzahl von Decodiervorgängen in dem Codec 94 statt.

Um innerhalb eines Pulsrahmens mehrere Analog-Signale in dem empfangsseitigen Filter 93 addieren zu können, muß das Tastverhältnis T der aus Digital-Signalen gewonnenen Analog-Signale so gewählt sein, daß es der Beziehung

$$T \geq td/To$$

genügt, wobei td die Decodierzeit eines Digital-Signals und damit der minimale zeitliche Abstand zwischen zwei zu berücksichtigenden Empfangspulsen bzw. Empfangs-Zeitschlitzen und To die Dauer eines Pulsrahmens bedeuten. Durch dieses Tastverhältnis T ist im übrigen auch die erforderliche Verstärkung eines dem Filter 93 nachzuschaltenden Verstärkers festgelegt. Je kürzer nämlich die Decodierzeit des Codecs 94 ist, umso mehr Teilnehmerstellen können in eine Konferenzgesprächsverbindung einbezogen werden und umso größer muß die Verstärkung des den Filter 93 nachzuschaltenden Verstärkers sein. Durch Betätigen des Tastschalters 111 wird bei der in Fig. 4 dargestellten Schaltungsanordnung das erwähnte Tastverhältnis T entsprechend eingestellt.

Abschließend sei noch bemerkt daß in entsprechender Weise — wie zuvor im Zusammenhang mit Konferenzgesprächsverbindungen erläutert — in den Anschlußstellen vorgegangen werden kann, um in bestehende Verbindungen gesonderte Töne bzw. Signale einzuspeisen. In diesem Fall sind der jeweiligen Anschlußstelle dann zumindest zeitweise zwei verschiedene Empfangspulse zugeteilt.

In der Konferenzschaltung kann anstelle mehrerer Register 105 und des Vergleichers 103 ein Speicher vorgesehen sein, der durch den Zähler 102 adressiert wird. Die Speicherkapazität muß dann der Anzahl der insgesamt verfügbaren Zeitschlitze entsprechen und z. B. 256 betragen. Die für die Empfangspulse vorgesehenen Speicherstellen werden von der zentralen Steuerung auf den logischen Zustand 1 gesetzt. Durch die Adressierung mit dem Zähler 102 erscheint am Ausgang des Speichers jeweils das Steuersignal für das bistabile Kippglied 100.

Wird eine große Anzahl Zeitschlitze verwendet, so ist die Pulsbreite auf der Ringleitung entsprechend kurz. In diesem Fall ist die Laufzeit auf der Ringleitung relativ zur Pulsbreite länger. Es ist in diesem Falle zweckmäßig, Takt- und Synchronisiersignale auf der Ringleitung mitzuführen. Dadurch wird gewährleistet, daß eine einmal vorhandene Phasenbeziehung zwischen Taktsignalen und Nutzsignalen beibehalten wird.

Es ist dann zweckmäßig, in der in Fig. 2 gezeigten Schaltung den Synchronisierzähler 102 und das bistabile Kippglied 100 mit den Taktsignalen 107 und dem Synchronsignal 112 anzusteuern, die beide im Empfangsleitungsteil 99 mitgeführt werden. Für die Sendesynchronisierung ist dann ein separater Zähler erforderlich, der gemeinsam mit dem bistabilen Kippglied 101 durch Signale angesteuert wird, die in dem Sendeleitungsteil 98 mitgeführt werden.

Fig. 5 zeigt die Weiterbildung der Schaltung. Der Synchronisierzähler für die Empfangsrichtung ist dort mit 102A bezeichnet. Dieser und das bistabile Kippglied 100 sind eingangsseitig mit einem Anschlußpunkt 107A verbunden. Ein weiterer Eingang des Zählers 102A ist an den Anschlußpunkt 112A angeschlossen. Der Anschlußpunkt 107A ist mit dem Taktsignal und der Anschlußpunkt 112A mit dem Synchronsignal beaufschlagt, die — wie oben erwähnt — im Empfangsleitungsteil 99 in Fig. 4 mitgeführt werden.

Die Anschlußpunkte 107B und 112B sind mit dem Takt- bzw. Synchronsignal aus dem Sendeleitungsteil 98 beaufschlagt. Punkt 107B ist mit dem Takteingang T des bistsbilen Kippgliedes 101 sowie einem Eingang des Synchronisierzählers für die Senderichtung 102B verbunden. Ein weiterer Eingang des Zählers 102B ist an den Anschlußpunkt 112B angeschlossen.

Der bereits erwähnte Vergleicher 103 ist mit seinem einen Eingang an den Ausgang des Zählers 102A und mit seinem anderen Eingang an das Register 105 angeschlossen, in dem die Empfangspulsadresse gespeichert ist. Der Ausgang des Vergleichers 103 steuert in vorbeschriebener Weise das bistabile Kippglied 100.

Der Vergleicher 104 ist mit seinem einen Eingang an den Ausgang des Zählers 102B und mit seinem anderen Eingang an das Register 106 angeschlossen, in dem die Sendepulsadresse gespeichert ist. Dieser Vergleicher steuert in vorbeschriebener Weise mit seinem Ausgangssignal den Setzeingang S des Kippgliedes 101.

## Patentansprüche

1. Schaltungsanordnung zur Steuerung der Übertragung von Digital-Signalen, insbesondere PCM-Signalen, zwischen Anschlußstellen eines Zeitmultiplex-Fernmeldenetzes, insbesondere PCM-Zeitmultiplex-Fernmeldenetzes, mittels einer zentralen Steuereinrichtung (1; 30) über eine Multiplexleitung (5; 31) mit der jede Anschlußstelle (22 bis 26; 39 bis 46) verbindbar ist und auf der jeder in eine Verbindung einbezogenen Anschlußstelle (22 bis 26; 39 bis 46) ein Sendepuls mit zyklisch wiederholt in aufeinanderfolgenden Pulsrahmen auftretenden Zeitschlitzen und ein Empfangspuls mit zyklisch wiederholt in aufeinanderfolgenden Pulsrahmen auftretenden Zeitschlitzen zugeteilt ist, wobei jeweils zu einer Anschlußgruppe (8, 9; 35, 36) zusammengefaßte Anschlußstellen (22 bis 26; 39 bis 46) mit ihren Sendeausgängen gemeinsam an einer Sendegruppenschiene (12, 14; 48, 52) und mit ihren Empfangseingängen gemeinsam an einer Empfangsgruppenschiene (13, 15; 49, 53) angeschlossen sind, sämtliche Gruppenschienen (12, 14; 48, 52; 13, 15; 49, 53) über Verstärker (16, 19; 37, 38) mit der Multiplexleitung verbunden sind, die Multiplexleitung (5; 31) durch eine einen Sendeleitungsteil (6; 32) und einen mit dem Sendeleitungsteil (6; 32) verbundenen Empfangsleitungsteil (7; 33) enthaltende Ringleitung (5; 31) mit einer zumindest der Anzahl der jeweils gleichzeitig zu übertragenden Signalbits eines Digital-Signals entsprechenden Anzahl von Einzelleitungen gebildet ist, die Sendegruppenschienen (12, 14; 48, 51) sämtlicher Anschlußgruppen (8, 9; 35, 36) jeweils mit einer zumindest der Anzahl der jeweils gleichzeitig zu übertragenden Signalbits eines Digital-Signals entsprechenden Anzahl von Einzelleitungen an den Einzelleitungen des Sendeleitungsteiles (6; 32) und die Empfangsgruppenschienen (13, 15; 49, 53) sämtlicher Anschlußgruppen (8, 9; 35, 36) jeweils mit einer zumindest der Anzahl der jeweils gleichzeitig zu übertragenden Signalbits eines Digital-Signals entsprechenden Anzahl von Einzelleitungen an den Einzelleitungen des Empfangsleitungsteiles (7; 33) der Ringleitung (5; 31) angeschlossen sind, dadurch gekennzeichnet, daß mit jeder Sendegruppenschiene (12, 14) eine Überwachungseinrichtung (18; 21) verbunden ist, mit der die Belegung von für Verbindungszwecke gesperrten Zeitschlitzen auf der jeweiligen Sendegruppenschiene (12; 14) überwachbar ist und die bei Ermittlung der Belegung eines solchen Zeitschlitzes ein Fehlermeldesignal abgibt.

2. Schaltungsanordnung nach Anspruch 1, dadurch gekennzeichnet, daß die zu den einzelnen Anschlußgruppen (8, 9; 35, 36) gehörenden Anschlußstellen (22 bis 26; 39 bis 46) jeweils über eine gruppenindividuell vorgesehene Befehlssammelleitung (z. B. 50, 54) mit der zentralen Steuereinrichtung (1; 30) verbunden sind.

3. Schaltungsanordnung nach Anspruch 2, dadurch gekennzeichnet, daß die Befehlssammelleitung für eine serielle Signalbitübertragung ausgelegt ist.

4. Schaltungsanordnung nach einem der Ansprüche 1 bis 3, dadurch gekennzeichnet, daß jeder Anschlußgruppe (8, 9) eine Abschalteinrichtung (17; 20) zugehörig ist, die von der zugehörigen Überwachungseinrichtung (18; 21) steuerbar ist.

5. Schaltungsanordnung nach einem der Anspüche 1 bis 4, dadurch gekennzeichnet, daß mit der Ringleitung (5; 31) eine Diagnoseeinheit (z. B. 67) verbunden ist.

6. Schaltungsanordnung nach einem der Ansprüche 1 bis 5, dadurch gekennzeichnet, daß für eine Signalisierungsgabe erforderliche Signalgeneratoren (2; 66) an der Ringleitung (5; 31) angeschlossen sind und daß diesen Signalgeneratoren (2; 66) jeweils ein Sendepuls fest zugeordnet ist.

7. Schaltungsanordnung nach einem der Ansprüche 1 bis 6, dadurch gekennzeichnet, daß die einzelnen Anschlußstellen (22 bis 26; 39 bis 46) dadurch in Konferenzverbindungen einbeziehbar sind, daß ihnen den Sendepulsen der übrigen, in die jeweilige Konferenzverbindung einbezogenen Anschlußstellen entsprechende Empfangspulse zugeteilt werden, und daß in der jeweiligen Anschlußstelle eine Addition von den jeweils übertragenen Digital-Signalen entsprechenden Analog-Signalen erfolgt.

8. Schaltungsanordnung nach Anspruch 7, dadurch gekennzeichnet, daß das Tastverhältnis T von aus Digital-Signalen gewonnenen Analog-Signalen in der jeweiligen Anschlußstelle so gewählt ist, daß es der Beziehung

$$T \geq td/To$$

genügt, wobei td die Decodierzeit eines Digital-Signals und damit der minimale zeitliche Abstand zwischen zwei zu berücksichtigenden Empfangs-Zeitschlitzen und To die Dauer eines Pulsrahmens bedeuten.

9. Schaltungsanordnung nach Anspruch 8, dadurch gekennzeichnet, daß am Eingang eines einem Digital-Analog-Wandler (94) nachgeschalteten Filters (93) ein Tastschalter (111) angeschlossen ist, der durch den Empfangszeitschlitzen entsprechende Schaltimpulse betätigbar ist.

10. Schaltungsanordnung nach einem der Ansprüche 1 bis 9, dadurch gekennzeichnet, daß die Steuerung der Abgabe und Aufnahme von Digital-Signalen in jeder Anschlußstelle (22 bis 26; 39 bis 46) durch eine der jeweiligen Anschlußstelle zugehörige Haltesatzschaltung (100 bis 106) erfolgt, in der die Zählerstellungen eines zyklisch betriebenen Zählers (102) — der während der Dauer jedes der auf der Ringleitung (5; 31) maßgebenden Pulsrahmens in eine der Anzahl der auf dieser Ringleitung (5; 31) für eine Signalübertragung benutzbaren Pulse entsprechende Anzahl von Zählerstellungen einstellbar ist — mit einer die dem jeweils zu benutzenden Sendepuls entsprechenden, von der zentralen Steuereinrichtung (1; 30) bereitgestellten Sendepulsadresse und mit einer die dem jeweils zu benutzenden Empfangspuls entsprechenden, von der zentralen Steuereinrichtung (1; 30) bereitgestellten Empfangspulsadresse verglichen wird, und daß bei Feststellen einer Übereinstimmung zwischen einer Zählerstellung des Zählers (102) und der Sendepulsadresse sowie einer anderen Zählerstellung des Zählers (102) und der Empfangspulsadresse von der betreffenden Haltesatzschaltung (100 bis 106) ein entsprechendes Steuersignal (»H«) zur Abgabe eines Digital-Signals an die zugehörige Sendegruppenschiene (98) bzw. ein entsprechendes Steuersignal (»H«) zur Aufnahme eines Digital-Signals von der zugehörigen Empfangsgruppenschiene (99) abgegeben wird.

# Claims

1. Circuit arrangement for controlling the transmission of digital signals, in particular PCM signals, between connection points of a time multiplex telecommunication system, in particular a PCM time multiplex telecommunication system, by means of a central control device (1; 30) which can be connected via a multiplex line (5; 31) with each connection point (22 to 26; 39 to 46) and for which each connection point (22 to 26; 39 to 46) included in a connection is assigned a transmission pulse with cyclically repeated time slots occurring in successive pulse frames and a receiving pulse with cyclically repeated time slots occurring in successive pulse frames, wherein connection points (22 to 26; 39 to 46) respectively combined to form a connection group (8, 9; 35, 36) are connected at their transmission outputs jointly to a transmission group rail (12, 14; 48, 52) and at their receiving inputs jointly to a receiving group rail (13, 15; 49, 53), all the group rails (12, 14; 48, 52; 13, 15; 49, 53) being connected via amplifiers (16, 19; 37, 38) to the multiplex line, the multiplex line (5; 31) being formed as a ring system (5; 31), which includes a transmission line part (6; 32) and a receiving line part (7; 33) connected to the transmission line part (6; 32), and having a number of individual lines corresponding at least to the number of the signal bits of a respective digital signal to be transmitted simultaneously; the transmission group rails (12, 14; 48, 51) of all the connection groups (8, 9; 35, 36) having respectively a number of individual lines corresponding at least to the number of the signal bits of a respective digital signal to be transmitted simultaneously and being connected to the individual lines of the transmission line part (6; 32), and the receiving group rails (13, 15; 49, 53) of all the connection groups (8, 9; 35, 36) having respectively a number of individual lines corresponding at least to the number of the signal bits of a respective digital signal to be transmitted simultaneously and being connected to the individual lines of the receiving line part (7; 33) of the ring system (5; 31); characterised in that a monitoring device (18; 21) is connected to each transmission group rail (12, 14), with which monitoring device it is possible to monitor on the respective transmission group rail (12; 14) the occupation of time slots, blocked for connection purposes, and which upon determining the occupation of such a time slot emits an error indication signal.

2. Circuit arrangement according to claim 1, characterised in that the connection points (22 to 26; 39 to 46) belonging to the individual connection groups (8, 9; 35, 36) are respectively connected to the central control device (1; 30) via a command collecting line (e. g. 50, 54) provided for individual groups.

3. Circuit arrangement according to claim 2, characterised in that the command collecting line is designed for a serial signal bits transmission.

4. Circuit arrangement according to one of claims 1 to 3, characterised in that each connection group (8, 9) is associated with a cut-off device (17; 20) which is controllable by the associated monitoring device (18; 21).

5. Circuit arrangement according to one of claims 1 to 4, characterised in that a diagnostic unit (e. g. 67) is connected to the ring system (5; 31).

6. Circuit arrangement according to one of claims 1 to 5, characterised in that signal generators (2; 66), necessary for signalling, are connected to the ring system (5; 31) and that a respective transmission pulse is permanently assigned to these signal generators (2; 66).

7. Circuit arrangement according to one of claims 1 to 6, characterised in that the individual connection points (22 to 26; 39 to 46) can be included in conference connections, by assigning to them receiving pulses corresponding to the transmission pulses of the remaining connection points included in the respective conference connection, and by effecting an addition of analogue signals corresponding to the respectively transmitted digital signals in the respective connection point.

8. Circuit arrangement according to claim 7, characterised in that the duty ratio T of analogue . signals produced from digital signals in the respective connection points is so chosen that it satisfies the equation

$$T \geq t_d/T_o,$$

wherein $t_d$ means the decoding time of a digital signal, and thus the minimum time interval between two received time slots to be considered, and $T_o$ means the duration of a pulse frame.

9. Circuit arrangement according to claim 8, characterised in that at the input of a filter (93) connected after a digital/analogue converter (94) there is connected a keying switch (111) which can be actuated by switching pulses corresponding to the received time slots.

10. Circuit arrangement according to one of claims 1 to 9, characterised in that the control of the output and input of digital signals in each connection point (22 to 26; 39 to 46) is effected by a hold set circuit (100 to 106), in which the counter positions of a cyclically operated counter (102) — which during the period of each pulse frame controlling the ring system (5; 31) is adjustable to a number of counter positions corresponding to the number of pulses usable on this ring system (5; 31) for a signal transmission — is compared with a transmission pulse adress which corresponds to the respective transmission pulse to be used and which is made available by the central control device (1; 30), and with a receiving pulse address which corresponds to the respective receiving pulse to be used and which is made available by the central control device (1; 30), and that upon detecting conformity between one counter position of the counter (102) and the transmission pulse address, and between another counter position of the counter (102) and the receiving pulse address, a corresponding control signal (»H«) is emitted for outputting a digital signal to the associated transmission group rail (99) or a corresponding control signal (»H«) is emitted for inputting a digital signal from the associated receiving group rail (99), from the relevant hold set circuit (100 to 106).

## Revendications

1. Montage pour commander la transmission de signaux numériques, en particulier des signaux à modulation par impulsions et codage (M. I. C.), entre de points de connexion d'un réseau de télécommunication à multiplexage temporel, notamment un réseau de télécommunication à multiplexage temporel M. I. C., au moyen d'une unité de commande centrale (1; 30) par l'intermédiaire d'une ligne multiplex (5; 31) à laquelle chaque point de connexion (22 à 26; 39 à 46) peut être relié et sur laquelle sont attribuées à chaque point de connexion (22 à 26; 39 à 46) participant à une liaison une impulsion d'émission avec des intervalles de temps se produisant de manière cycliquement répétée dans des trames d'impulsions successives et une impulsion de réception avec des intervalles de temps se produisant de manière cycliquement répétée dans des trames d'impulsions successives, tandis que des points de connexion (22 à 26; 39 à 46) réunis respectivement en un groupe de connexion (8, 9; 35, 36) sont raccordés avec leurs sorties émettrices ensemble à une barre collectrice d'émission (12, 14; 48, 52) et avec leurs entrées réceptrices ensemble à une barre collectrice de réception (13, 15; 49, 53), toutes les barres collectrices (12, 14; 48, 52; 13, 15; 49, 53) sont reliées par l'intermédiaire d'amplificateurs (16, 19; 37, 38) à la ligne multiplex, la ligne multiplex (5; 31) est formée d'une ligne bouclée (5; 31) comportant une partie émettrice (6; 32) et une partie réceptrice (7; 33) reliée à la partie émettrice (6; 32), la ligne bouclée présentant un nombre de lignes individuelles qui correspond au moins au nombre des éléments binaires, ou bits, d'un signal numérique qui doivent chaque fois être transmis simultanément, les barres collectrices d'émission (12, 14; 48, 51) de tous les groupes de connexion (8, 9; 35, 36) sont chacune raccordées, avec un nombre de lignes individuelles correspondant au moins au nombre des bits d'un signal numérique qui doivent chaque fois être transmis sumultanément, aux lignes individuelles de la partie émettrice (6; 32) et les barres collectrices de réception (13, 15; 49, 53) de tous les groupes de connexion (8, 9; 35, 36) sont chacune raccordées, par un nombre de lignes individuelles correspondant au moins au nombre des bits d'un signal numérique qui doivent chaque fois être transmis simultanément, aux lignes individuelles de la partie réceptrice (7; 33) de la ligne bouclée (5; 31), caractérisé en ce qu'à chaque barre collectrice d'émission (12, 14) est relié un dispositif de contrôle (18; 21) par lequel l'occupation d'intervalles de temps non disponibles à des fins de liaison peut être contrôlée sur la barre collectrice d'émission concernée (12; 14) et qui en cas de constatation de l'occupation d'un tel intervalle de temps délivre un signal d'erreur.

2. Montage selon la revendication 1, caractérisé en ce que les points de connexion (22 à 26; 39 à 46) appartenant aux différents groups de connexion (8, 9; 35, 36) sont respectivement reliées, par l'intermédiaire d'une ligne collectrice d'instructions (par exemple 50, 54) propre à chaque groupe, à l'unité de commande centrale (1; 30).

3. Montage selon la revendication 2, caractérisé en ce que la ligne collectrice d'instructions est conçue pour une transmission séquentielle des bits du signal.

4. Montage selon l'une quelconque des revendications 1 à 3, caractérisé en ce qu'à chaque groupe de connexion (8, 9) est associé un dispositif de mise hors circuit (17; 20) qui peut être commandé par le dispositif de contrôle correspondant (18; 21).

5. Montage selon l'une quelconque des revendications 1 à 4, caractérisé en ce qu'à la ligne bouclée (5; 31) est relié un dispositif de diagnostic (par exemple 67).

6. Montage selon l'une quelconque des revendications 1 à 5, caractérisé en ce que des générateurs de signaux (2; 66) nécessaires à la signalisation sont raccordés à la ligne bouclée (5; 31) et en ce qu'à chacun de ces générateurs de signaux (2; 66) est associée de manière fixe une impulsion émettrice.

7. Montage selon l'une quelconque des revendications 1 à 6, caractérisé en ce que les différents points de connexion (22 à 26; 39 à 46) peuvent être amenés à prendre part à des liaisons de conférence en leur attribuant des impulsions de réception correspondant aux impulsions d'émission des autres points de connexion prenant part à la liaison de conférence concernée, et en realisant au niveau du point de connexion concerné une addition de signaux analogiques correspondant aux signaux numériques transmis à chaque fois.

8. Montage selon la revendication 7, caractérisé en ce que le taux d'impulsion T de signaux analogiques obtenus à partir de signaux numériques au point de connexion concerné est choisi de manière à satisfaire à la relation

$$T \geq td/To$$

où td représente le temps de décodage d'un signal numérique et, par suite, l'espacement minimal dans le temps entre deux intervalles de temps de réception à prendre en considération et To représente la durée d'une trame d'impulsions.

9. Montage selon la revendication 8, caractérisé en ce qu'à l'entrée d'un filtre (93) monté en aval d'un convertisseur numérique-analogique (94) est connected un commutateur à impulsions (111) qui peut être actionné par des impulsions de commutation correspondant aux intervalles de temps de réception.

10. Montage selon l'une quelconque des revendications 1 à 9, caractérisé en ce que la commande de l'émission et de la réception de signaux numériques en chaque point de connexion (22 à 26; 39 à 46) se réalise au moyen d'un circuit de maintien (100 à 106) associé au point de connexion concerné et dans lequel les positions d'un compteur à fonctionnement cyclique (102), qui au cours de la durée de chaque trame d'impulsions déterminate sur la ligne bouclée (5; 31) est réglable dans un nombre de positions qui correspond au nombre des impulsions pouvant être utilisées sur cette ligne bouclée (5; 31) pour une transmission de signaux, sont comparées avec une adresse d'impulsion d'émission mise à disposition par l'unité de commande centrale (1; 30) et correspondant à l'impulsion d'émission à utiliser à chaque fois et avec une adresse d'impulsion de réception mise à disposition par l'unité de commande centrale (1; 30) et correspondant à l'impulsion de réception à utiliser à chaque fois, et en ce qu'en cas de constatation d'une correspondance entre une position de compteur (102) et l'adresse d'impulsion d'émission ainsi qu'entre une autre position du compteur (102) et l'adresse d'impulsion de réception il est délivré par le circuit de maintien concerné (100 à 106) un signal de commande correspondant (»H«) pour la délivrance d'un signal numérique à la barre collectrice d'émission correspondante (98) ou un signal de commande correspondant (»H«) pour la réception d'un signal numérique à patir de la barre collectrice de réception correspondante (99).

FIG. 1

FIG. 2

FIG. 3

FIG. 4

FIG. 5